# EUROPEAN PATENT APPLICATION

(11) **EP 3 809 217 A1**
(43) Date of publication of application: **21.04.2021**
(21) Application number: 19820107.1
(22) Date of filing: 17.05.2019
(51) Int. Cl.: G05B 19/418, G06T 7/70

(54) **INFORMATION PROCESSING DEVICE, INFORMATION PROCESSING METHOD, AND PROGRAM**

(30) Priority: 14.06.2018 JP 2018113842
(71) Applicant: OMRON Corporation, Shiokoji-dori, Shimogyo-ku, Kyoto-shi Kyoto 600-8530 (JP)
(72) Inventor: SATO, Takahiro, Kyoto 619-0283 (JP); TAKATORI, Koji, Kyoto 619-0283 (JP); YAMAMOTO, Michihiro, Kyoto 619-0283 (JP); MIZUTANI, Seiji, Kyoto 619-0283 (JP); MURAYAMA, Shinji, Kyoto 619-0283 (JP)
(74) Representative: Becker, Eberhard
(86) International application number: PCT/JP2019/019605
(87) International publication number: WO 2019/239788

(57) **Abstract**

Provided is an information processing device that generates a layout diagram corresponding to the actual configuration of a control panel. An information processing device (1) is provided with: an image recognition unit (151) that recognizes device-identifying images (ID codes 211) of control devices (210) included in a captured image in which an imaging device (camera 110) has captured an image of a control panel (2); a device specification unit (152) that specifies device-type information and an installation location for the control devices on the basis of the recognized device-identifying images; and a layout diagram generation unit (154) that generates a layout diagram of the various control devices on the control panel on the basis of the device-type information and installation location of the various specified control devices.

## Description

### BACKGROUND

### Technical Field

The present invention relates to an information processing apparatus or the like that generates a layout diagram according to an actual configuration of a control panel.

### Related Art

A technique is known in which, when a worker (user) performs work on a device, a human error of erroneously performing work on a device different from the work target is suppressed. For example, patent literature 1 discloses a control panel manufacturing support apparatus in which, when an IC tag is attached to parts necessary for manufacturing a control panel and the IC tag is read by an IC tag reader, mounting locations of the parts associated with the IC tag are shown on the drawings for manufacturing of the control panel.

### [Literature of related art]

### [Patent literature]

Patent literature 1: Japanese Patent Laid-open No. 2007-233566 (Published on September 13, 2007)

### SUMMARY

### [Problems to be Solved]

However, in the invention described in patent literature 1, it is possible to show the mounting locations of specific parts on the drawings, but it is necessary to prepare the drawings for manufacturing of the control panel in advance. Therefore, for example, there is a problem that when the configuration of the control panel has been changed from the time of manufacture during maintenance of the control panel, the mounting locations of the parts are shown on the drawings different from an actual configuration.

One aspect of the present invention has been made in view of the above problems, and an object thereof is to provide an information processing apparatus that generates a layout diagram according to an actual configuration of a control panel on site.

### [Means to Solve Problems]

The present invention adopts the following configurations in order to solve the above problems.

That is, an information processing apparatus according to one aspect of the present invention includes: an imaging device that captures an image of a control panel to acquire a captured image, wherein the control panel is equipped with a plurality of control devices in which device identification images indicating model information are arranged; an image recognition unit that recognizes the device identification images included in the captured image; a device specification unit that specifies the model information and installation positions of the control devices based on the device identification images recognized by the image recognition unit; and a layout diagram generation unit that generates a layout diagram of the control devices in the control panel based on the model information and the installation positions of the control devices specified by the device specification unit.

An information processing method according to one aspect of the present invention may include: an image recognition step of acquiring a captured image of a control panel equipped with a plurality of control devices in which device identification images indicating model information are arranged, and recognizing the device identification images included in the captured image; a device specification step of specifying the model information and installation positions of the control devices based on the device identification images which are recognized by the image recognition step; and a layout diagram generation step of generating a layout diagram of the control devices in the control panel based on the model information and the installation positions of the control devices which are specified by the device specification step.

### [Effect]

According to one aspect of the present invention, it is possible to provide an information processing apparatus that generates a layout diagram according to an actual configuration of a control panel on site.

### BRIEF DESCRIPTION OF THE DRAWINGS

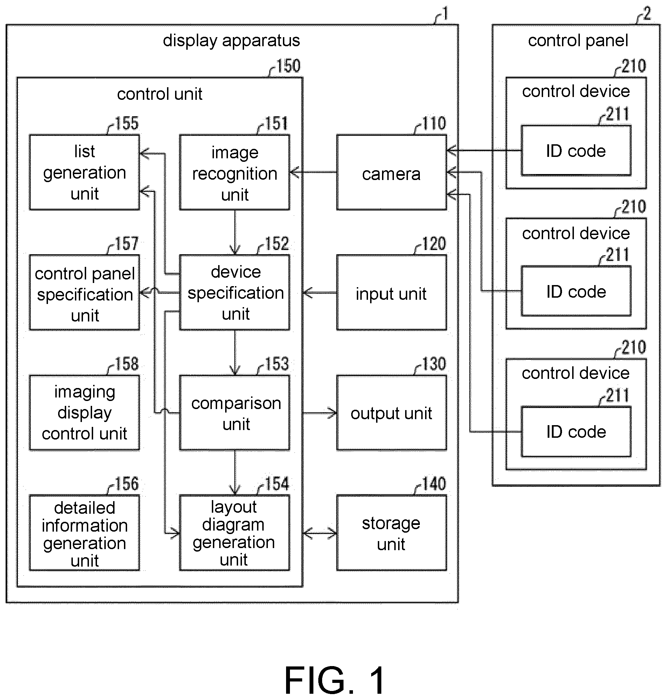

FIG. 1 is a block diagram showing an example of a main configuration of an information processing apparatus according to an embodiment.

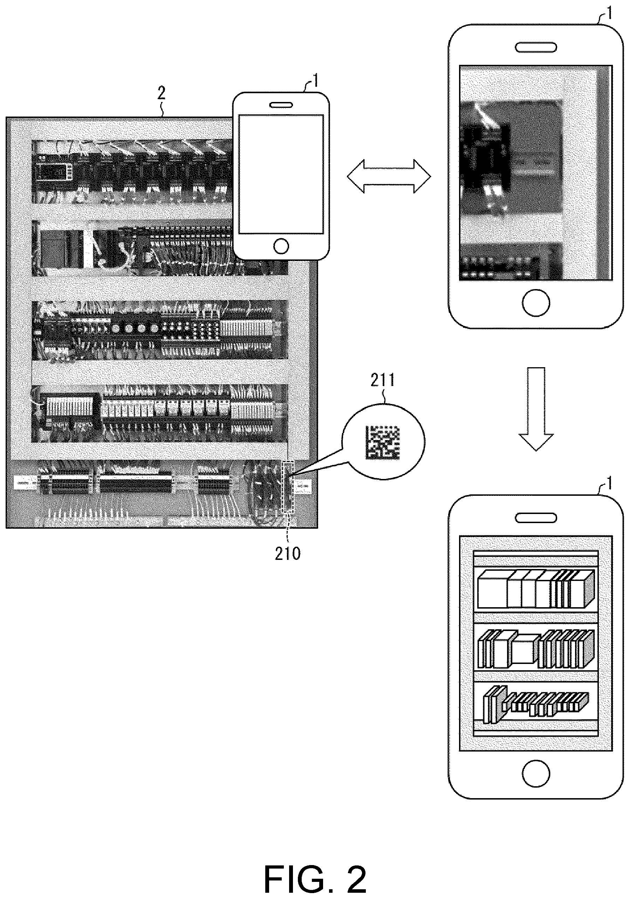

FIG. 2 is a schematic diagram showing an example of an application scene of the information processing apparatus according to the embodiment.

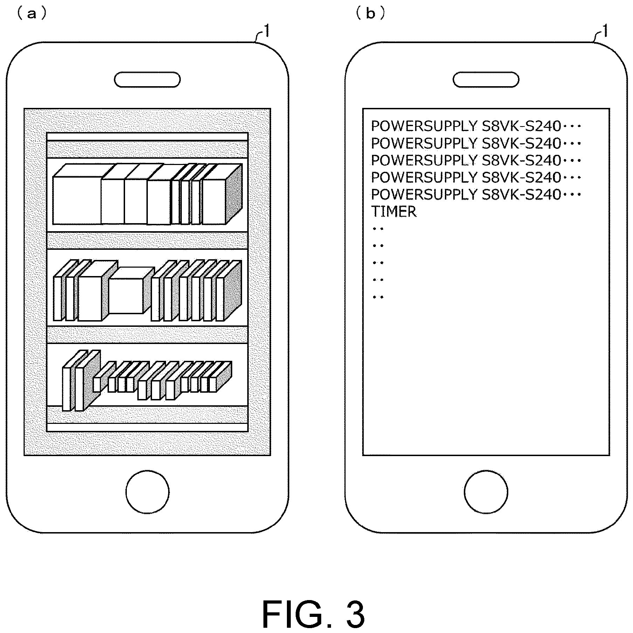

FIG. 3 is a schematic diagram showing an example of information generated from a captured image by the information processing apparatus according to the embodiment, wherein (a) of FIG. 3 shows a layout diagram of control devices in a control panel, and (b) of FIG. 3 shows a list of the control devices in the control panel.

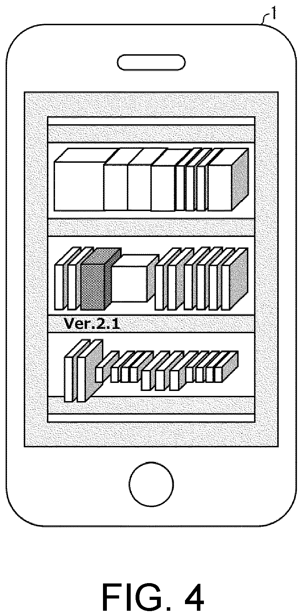

FIG. 4 is a schematic diagram showing an example in which a difference from design information or past information of the imaged control panel, among the layout diagram generated from the captured image in the information processing apparatus according to the embodiment, is emphasized and expressed in the layout diagram.

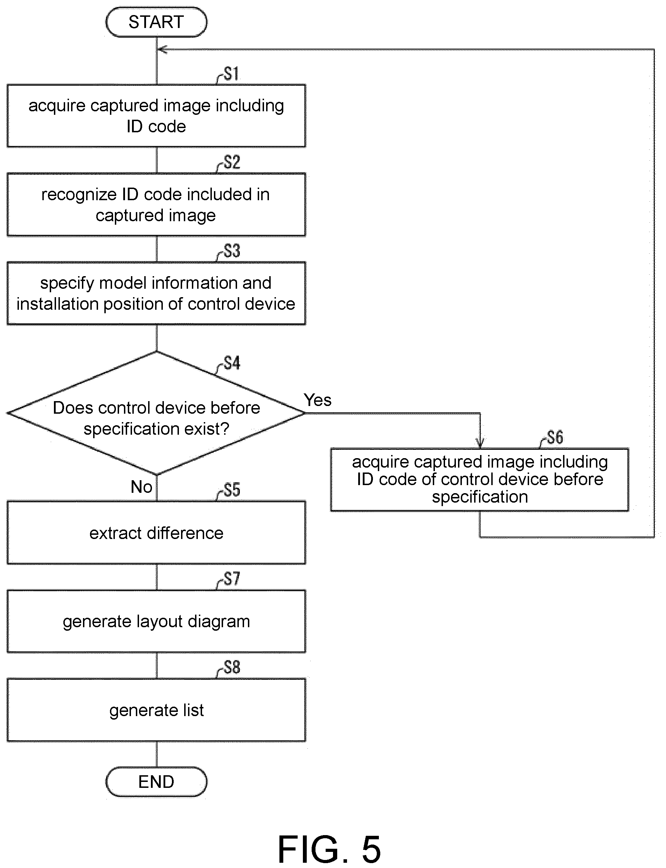

FIG. 5 is a flowchart showing an example of processing executed by the information processing apparatus according to the embodiment.

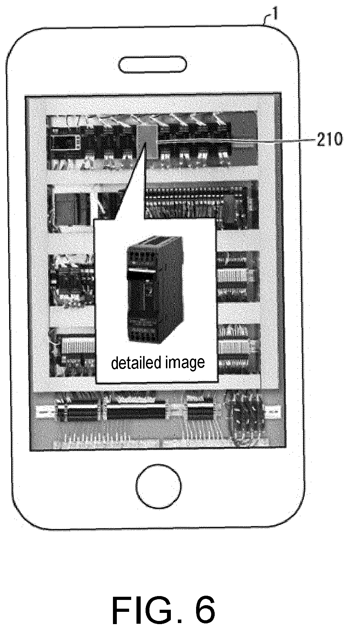

FIG. 6 is a schematic diagram showing an example of generating detailed information of a control device 210 selected by a user, superimposing the detailed information on the captured image, and outputting the detailed information in an information processing apparatus according to a variation example.

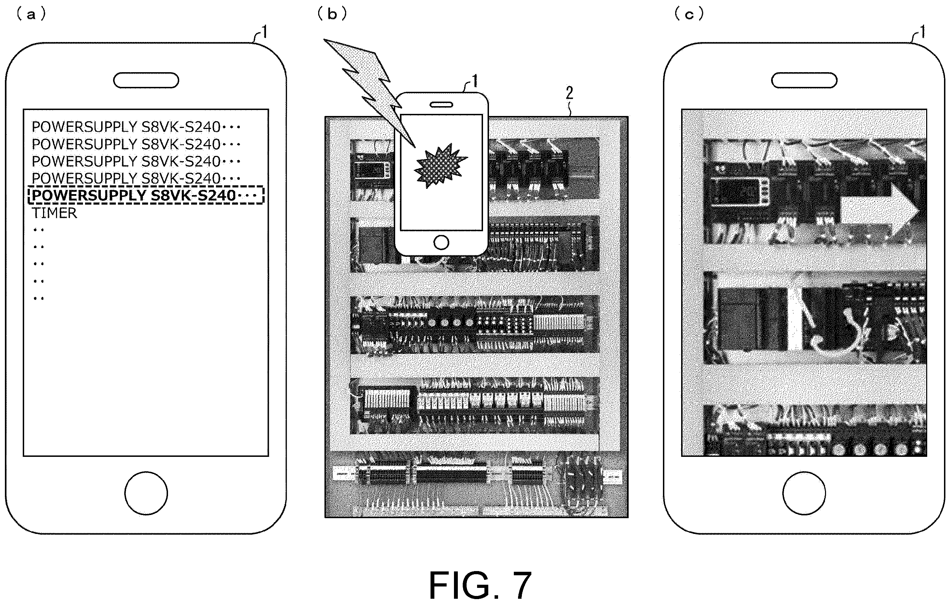

FIG. 7 is a schematic diagram showing an example of an operation that is executed by the information processing apparatus according to the variation example to recognize an imaging device selected using a currently captured image, wherein (a) of FIG. 7 shows an example in which the user selects a specific control device, (b) of FIG. 7 shows an operation of the information processing apparatus when the selected control device is included in the captured image acquired after (a) of FIG. 7, and (c) of FIG. 7 shows an operation of the information processing apparatus when the selected control device is not included in the captured image acquired after (a) of FIG. 7.

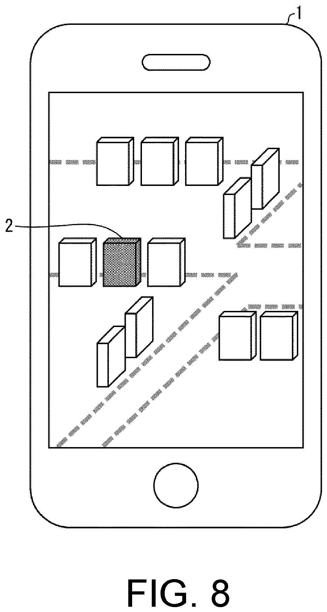

FIG. 8 is a schematic diagram showing, on a map, a position of the control panel specified from the captured image by the information processing apparatus according to the variation example.

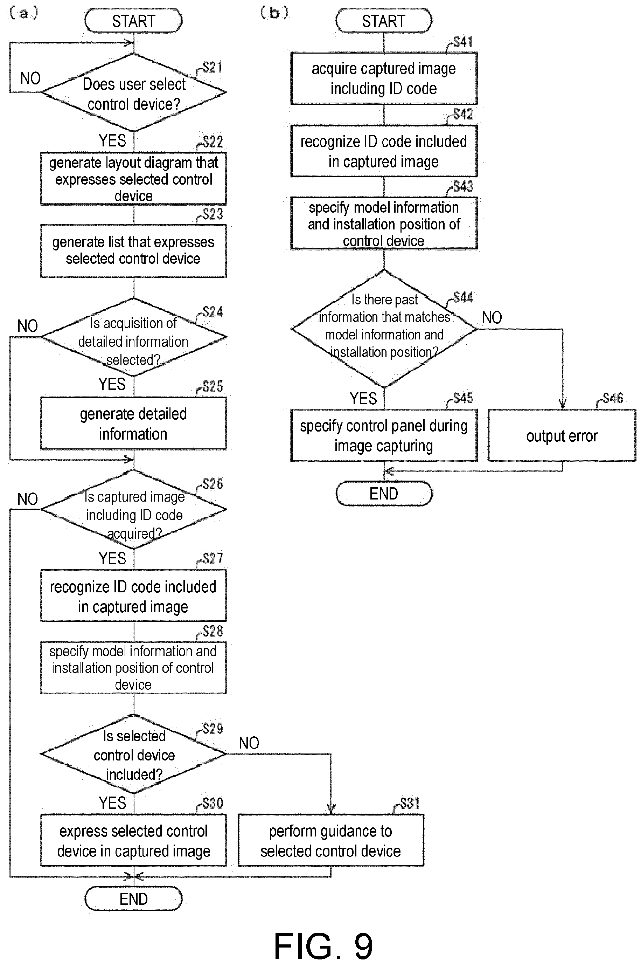

FIG. 9 is a flowchart showing an example of processing executed by the information processing apparatus according to the variation example, wherein (a) of FIG. 9 shows an example of detailed information generation processing and imaging display control processing, and (b) of FIG. 9 shows an example of control panel specification processing.

### DESCRIPTION OF THE EMBODIMENTS

### §1 Application example

First, an example of a scene in which the present invention is applied is described with reference to FIG. 2. FIG. 2 schematically illustrates an example of an application scene of an information processing apparatus 1 according to the embodiment. The information processing apparatus 1 according to the embodiment generates a layout diagram of control devices in a control panel 2 based on model information and installation positions of a plurality of control devices 210 installed in the control panel 2 and outputs the generated layout diagram. Moreover, each of the plurality of control devices 210 is equipped with a device identification image that is an image in one-to-one association with each control device 210 and showing the model information of the control device 210.

In the illustrated example, the device identification image is shown as an ID code 211, which is a two-dimensional code attached to a front surface of the control device 210. When a captured image of the control panel 2 is acquired (upper right of the diagram), the information processing apparatus 1 recognizes the ID code 211 included in the captured image and specifies the control device 210 associated with the ID code 211 (left side of the diagram). Then, when all the control devices 210 installed in the control panel 2 are specified, the information processing apparatus 1 generates a layout diagram based on the model information and the installation positions in the control panel 2, wherein the model information includes information such as an outer shape of each control device 210 (lower right of the diagram). Moreover, the ID code 211 may be any code as long as it can uniquely specify the control device 210. The ID code 211 may be, for example, a serial number of the control device 210 or the like.

In this way, the information processing apparatus 1 can generate the layout diagram of the control device 210 in the control panel 2 from the captured image of the control panel 2. Thereby, various pieces of work can be implemented using the layout diagram according to an actual configuration of the control panel 2. For example, even if the layout of the control device 210 has been changed since the design of the control panel 2, it is possible to prevent that work is implemented on the wrong control device 210.

### §2 Configuration example

Hereinafter, an embodiment of the present invention is described in detail with reference to FIG. 1 and FIGS. 3 to 5.

### (Configuration of information processing apparatus)

A configuration of the information processing apparatus 1 according to the embodiment is described with reference to FIG. 1. FIG. 1 is a block diagram showing an example of a main configuration of the information processing apparatus 1.

The information processing apparatus 1 can generate the layout diagram of the control devices 210 for the control panel 2 in which the plurality of control devices 210 is installed. The information processing apparatus 1 may be, for example, a mobile information terminal such as a smartphone with a camera, a tablet terminal, or a small notebook PC. The information processing apparatus 1 includes a camera 110, an input unit 120, an output unit 130, a storage unit 140, and a control unit 150. The control unit 150 includes an image recognition unit 151, a device specification unit 152, a comparison unit 153, a layout diagram generation unit 154, a list generation unit 155, a detailed information generation unit 156, a control panel specification unit 157, and an imaging display control unit 158. Moreover, details of the detailed information generation unit 156, the control panel specification unit 157, and the imaging display control unit 158 are described in a variation example described later.

The camera 110 is an imaging device that captures an image according to an instruction from the control unit 150 and acquires a captured image. The captured image may be a partial captured image of the control panel 2. The captured image preferably includes at least one ID code 211 attached to the control device 210, and more preferably includes a plurality of ID codes 211.

The input unit 120 is an interface for inputting when a user of the information processing apparatus 1 causes the information processing apparatus 1 to perform a desired operation. The input unit 120 may be, for example, a touch panel integrally formed with the output unit 130 described later.

The output unit 130 is an interface used by the information processing apparatus 1 to output various information to the outside. The output unit 130 includes at least a display that displays the captured image or the like captured by the camera 110 according to the instruction from the control unit 150, but may include a speaker that outputs sound to the outside, a motor that generates vibration, or the like.

The storage unit 140 stores various information handled by the information processing apparatus 1. The storage unit 140 may include at least information for associating the control device 210 with the ID code 211 that is device identification information attached to the control device 210, or further include layout information indicating the installation positions of the plurality of control devices 210 in the control panel 2. In addition, the model information that is information about specifications including the outer shape or the like of the control device 210 may be included.

The storage unit 140 may store information referred to by the comparison unit 153, the layout diagram generation unit 154, and the list generation unit 155. Specifically, the storage unit 140 may store reference information indicating the model information and the installation positions of the control devices 210 in a predetermined state. The reference information may be, for example, design information that is designed in advance by the user and indicates the model information and the installation positions of the control devices 210 in the control panel 2. The reference information may be past information indicating the model information and the installation positions of the control devices 210 preciously specified by the device specification unit 152, or may include GPS information indicating an altitude of the installation position at the time when each control device 210 is specified. The design information and the past information may include information about a plurality of control panels 2. Moreover, these pieces of information may be acquired from the outside via, for example, a communication unit not shown.

The control unit 150 centrally controls each unit of the information processing apparatus 1. The control unit 150 uses the camera 110 to capture an image and transmits the acquired image to the image recognition unit 151. The control unit 150 executes various operations based on a user input accepted by the input unit 120. The control unit 150 outputs various pieces of information to the output unit 130. Specifically, the control unit 150 can output the layout diagram generated by the layout diagram generation unit 154 and the list generated by the list generation unit 155 to the outside via the output unit 130. Moreover, the control unit 150 may perform switching between the layout diagram and the list for the content output by the output unit 130. Furthermore, it is possible to perform switching between a layout diagram and a list including a difference described later and a layout diagram and a list not including the difference.

When the captured image is received from the control unit 150, the image recognition unit 151 recognizes the ID code 211 included in the captured image, and transmits the recognized result to the device specification unit 152. The recognition of the ID code 211 may be performed using a known image recognition technique. The image recognition unit 151 may collectively recognize a plurality of ID codes 211. In addition, the image recognition unit 151 may also recognize an external feature or the like of the control device 210 so that the device specification unit 152 can specify a device type or the like from the external feature.

The device specification unit 152 uniquely specifies the control device 210 with which the ID code 211 recognized by the image recognition unit 151 is associated. More specifically, the device specification unit 152 refers to the information stored in the storage unit 140 to specify the control device 210 associated with the ID code 211, and acquires the model information of the control device 210 and the information about the installation position of the control device 210 in the control panel 2. The device specification unit 152 specifies the model information and the installation positions for all the control devices 210 installed in the control panel 2. In other words, the device specification unit 152 specifies the installation position of each control device 210 by combining a plurality of captured images to recognize an overall configuration of the control panel 2. That is, even if the device specification unit 152 cannot specify all the control devices 210 installed in the control panel 2 from one captured image, the device specification unit 152 may acquire a plurality of captured images including some control devices 210. If all the control devices 210 installed in the control panel 2 are included at least once in the plurality of acquired images, the device specification unit 152 can combine the captured images according to a positional relationship between the adjacent control devices 210 for example. Then, the plurality of captured images can be combined to generate one image showing the overall configuration of the control panel 2. Thereby, the device specification unit 152 can specify the installation positions of all the control devices 210 included in the image. The device specification unit 152 transmits the acquired information to the comparison unit 153, the layout diagram generation unit 154, and the list generation unit 155.

The comparison unit 153 acquires the reference information indicating the model information and the installation position of each control device 210 in a predetermined state, compares the reference information with the model information and the installation information of each control device 210 specified by the device specification unit 152, and extracts the difference. Here, the reference information represents design information that is designed in advance by the user and indicates the installation state of each control device 210 in the control panel 2, or past information indicating the model information and the position installation of each control device 210 previously specified by the device specification unit 152. That is, the comparison unit 153 compares the model information and the installation position of the control device 210 specified by the device specification unit 152 with the design information and the past information of the control panel 2, and extracts a changed portion as the difference.

Moreover, the reference information may be stored in the storage unit 140 or may be acquired from the outside via a communication unit not shown. In addition, the user may be able to select what reference information is selected as a comparison source. For example, when it is desired to confirm the changed portion from the previous work, the past information of the previous work may be used. Then, version information or the like according to the change history may be acquired at the same time as the extraction of the difference.

The layout diagram generation unit 154 generates a layout diagram of each control device 210 in the control panel 2 based on the model information and the installation position of the control device 210 specified by the device specification unit 152. Specifically, the layout diagram generation unit 154 arranges each control device 210 according to the installation position, and then uses the outer shape or size of each control device 210 included in the model information to express the control device 210. Thereby, the layout diagram generation unit 154 can generate the layout diagram similar to the lower right of FIG. 2. Moreover, for example, the outer shape of the control device 210 recognized by the image recognition unit 151 may be used in the generation of the layout diagram.

Furthermore, the layout diagram generation unit 154 can generate a layout diagram that expresses the difference extracted by the comparison unit 153. Specifically, if the control devices 210 specified by the device specification unit 152 include a control device 210 corresponding to the difference extracted by the comparison unit 153, the layout diagram generation unit 154 may generate the layout diagram that expresses the control device 210 by boldface, color coding, or the like. At this time, version information or the like may be added to the control device 210 corresponding to the difference.

The list generation unit 155 generates a list of the control device 210 installed in the control panel 2 based on the model information and the installation position of each control device 210 specified by the device specification unit 152. That is, although there is a difference between the layout diagram and the list to be generated, the list generation unit 155 performs the same processing as that of the layout diagram generation unit 154 to generate the list of the control device 210. For example, the list generation unit 155 may express a character string in the list by boldface, color coding, or the like for the control device corresponding to the difference extracted by the comparison unit 153.

### (Configuration of control panel)

The control panel 2 is an apparatus that has a plurality of control devices 210 installed therein according to the purpose and controls various electric devices. In the illustrated example, three control devices 210 are installed in the control panel 2, and each control device 210 is equipped with the ID code 211. Moreover, the three control devices 210 may be the same model or different models, but the three ID codes 211 must be different from each other. The control panel 2 may have a configuration in which a housing includes a plurality of rails (partial accommodation regions) and the control device 210 can be installed by fixing the control device 210 to the rail. In other words, the control panel 2 may be configured to include a plurality of partial accommodation regions each of which accommodates a plurality of control devices 210.

The control device 210 is an electronic device installed inside the control panel 2. The control device 210 may be, for example, a CPU unit of a programmable logic controller (PLC), a communication coupler unit, an input unit that inputs a sensing result from a sensor, or a control output unit that controls a motor, a robot, or the like. The control device 210 may have any size or orientation as long as the control device 210 can be accommodated in the above-described partial accommodation region.

The ID code 211 is a device identification image capable of uniquely specifying the control device 210, and one ID code 211 is associated with one control device 210. The ID code 211 may be in the form of a two-dimensional code arranged on the control device 210. There is no limitation on the installation location of the ID code 211, but the ID code 211 is preferably arranged at a position where the ID codes 211 of all the control devices 210 installed in the control panel 2 can be confirmed at the same time when the entire control panel 2 is imaged.

### (Output examples of layout diagram and list)

In the information processing apparatus 1 according to the configuration example, output examples of the layout diagram and the list generated from the captured image are described with reference to FIG. 3. FIG. 3 is a schematic diagram showing an example of the layout diagram and the list generated from the captured image by the information processing apparatus 1, wherein (a) of FIG. 3 shows an output example of the layout diagram, and (b) of FIG. 3 shows an output example of the list.

According to (a) of FIG. 3, the layout diagram shows each of the plurality of control devices 210 installed in the control panel 2 by a rectangular parallelepiped image. More specifically, in the layout diagram, based on the model information and the installation position specified by the device specification unit 152, and an arrangement order or the like of the plurality of control devices 210 corresponds to the actual configuration of the control panel 2. According to the illustrated example, in the control panel 2, the plurality of control devices 210 is installed in three horizontal rows. In addition, in the layout diagram, the rectangular parallelepiped image may be represented by the size or shape according to the model information (particularly, the outer shape) of the corresponding control device 210.

In (b) of FIG. 3, the names of the plurality of control devices 210 installed in the control panel 2 are represented in a list format in the information processing apparatus 1. Specifically, the list includes the model information and the installation position specified by the device specification unit 152, detailed information about the corresponding model, and the like. In this list, the order in which the model information is displayed may be sorted by the type of model, or may be sorted in the order of actual installation positions in the control panel 2.

### (Express example of difference)

In the information processing apparatus 1 according to the configuration example, an express example of the difference extracted using the reference information is described with reference to FIG. 4. FIG. 4 is a schematic diagram showing an example in which the difference from the reference information is expressed in the layout diagram generated from the captured image by the information processing apparatus 1.

In the illustrated example, the color coding and version information express that the control device 210 existing in the second line from the top and the third line from the left inside the control panel 2 is the difference from the reference information. That is, the rectangular parallelepiped image showing the control device 210 corresponding to the difference in the layout diagram is color-coded, and a character string "Ver.2.1" is further shown as concrete version information below the image.

### (Flow of processing)

A flow of processing executed by the information processing apparatus 1 according to the configuration example is described with reference to FIG. 5. FIG. 5 is a flowchart showing an example of the flow of the processing executed by the information processing apparatus 1.

First, the control unit 150 uses the camera 110 to acquire a captured image including the ID code 211 (S1). Next, the image recognition unit 151 recognizes the ID code 211 included in the captured image acquired in S1, and transmits the recognition result to the device specification unit 152 (S2: image recognition step). The device specification unit 152 specifies the control device 210 associated with the ID code 211 included in the received recognition result and the model information of the control device 210. The device specification unit 152 further specifies the installation position of the control device 210 specified with reference to the layout information of the control panel 2 (S3: device specification step).

After S3, the device specification unit 152 refers to the layout information of the control panel 2 and determines whether the control device 210 before specification exists (S4). When it is determined that the control device 210 before specification does not exist (NO in S4), the comparison unit 153 compares the model information and the installation position of the control device 210 specified in S3 with the design information or the past information to extract the difference (S5: comparison step). Then, the processing proceeds to S7. On the other hand, when it is determined that the control device 210 before specification exists (NO in S4), the control unit 150 uses the camera 110 to acquire a captured image including the ID code 211 of the control device 210 before specification (S6). After that, the processing proceeds to S1, and the processing of S1 to S4 is executed again.

In S7, the layout diagram generation unit 154 uses the model information and the installation position of the control device 210 specified by the device specification unit 152 in S3 and the difference extracted by the comparison unit 153 in S5, to generate the layout diagram of each control device 210 in the control panel 2 (S7: layout diagram generation step). Furthermore, the list generation unit 155 generates the list of each control device 210 in the control panel 2 (S8). Thereafter, the series of processing is ended.

By the above processing, the information processing apparatus 1 can generate the layout diagram and the list of the control device 210 in the control panel 2 from the captured image. Thereby, for example, the user of the information processing apparatus 1 can perform the work by using the layout diagram and the list generated based on the actual configuration of the control panel 2. Thus, there is an effect that it is possible to provide the information processing apparatus 1 that is excellent in convenience and that generates the layout diagram and the list according to the actual configuration of the control panel 2 on site.

In the embodiment, when the device specification unit 152 specifies the control device 210 from the ID code 211, the device specification unit 152 may store the GPS information of the control device 210 as history information together with the past information in the storage unit 140 or the like. By combining the GPS information with the map information or the like, the altitude of the installation position of the control device 210 can be estimated. At this time, for example, it is possible to consider the relationship between the atmospheric pressure and temperature according to the altitude and the life of the control device 210, or to confirm whether the control panel 2 or the control device 210 has been relocated. Furthermore, when a defect occurs, it can be estimated whether the defect is caused by relocation. In addition, when the user selects a specific control device 210 from the layout diagram or the list, the position of the selected control device 210 can be output according to the GPS information. In other words, the layout diagram generation unit 154 and the list generation unit 155 may use the GPS information to express the installation position of the control device 210 corresponding to the model selected by the user in the layout diagram or the list. Then, by confirming the history of the GPS information, it is possible to confirm which control panel 2 the control device 210 has been operating in and how long the control device 210 has been operating. Moreover, the information about which control panel 210 each control device 210 is installed in is stored as history information at each specific time, and thereby the various functions described above can be realized without using the GPS information.

### §3 Variation example

Hereinafter, an embodiment of the present invention is described in detail with reference to FIG. 1 and FIGS. 6 to 9.

### (Configuration of information processing apparatus)

The configuration of the information processing apparatus 1 according to the embodiment is described with reference to FIGS. 1, 6, and 8. The basic configuration of the information processing apparatus 1 is the same as in the above configuration example, but a part of the configuration is different. The information processing apparatus 1 can express (emphasize) the control device 210 selected by the user in the layout diagram and the list, and output the control device 210. When the user selects the acquisition of the detailed information of the selected control device 210, the information processing apparatus 1 generates and outputs the detailed information of the control device 210. When the control device 210 is specified based on the ID code 211 included in , the information processing apparatus 1 can specify the control panel 2 in which the specified control device 210 is installed. After the user selects the control device 210, the information processing apparatus 1 may determine whether the captured image acquired using the camera 110 includes the selected control device 210, and perform a notification according to the determination result.

The storage unit 140 may further include a model database that records the detailed information of the control device 210. The model database may be arranged outside and acquired via a communication unit not shown, or may update the information stored in the storage unit 140 with information acquired from the outside. The detailed information of the control device 210 may include information of an image, a specification, and an alternative device of the control device 210,.

According to an instruction from the control unit 150, the detailed information generation unit 156 refers to a model database that records the detailed information about the model of the control device 210 and generates the detailed information. For example, as shown in FIG. 6, the information processing apparatus 1 may superimpose and display the image (detailed image) of the control device 210 generated by the detailed information generation unit 156 on the captured image. Thereby, when visual recognition of the control device 210 is difficult due to, for example, a dark place, it can be easy for the user of the information processing apparatus 1 to visually recognize the control device 210 by superimposing and expressing the detailed image on the captured image.

The control panel specification unit 157 specifies the control panel 2 during image capturing from the currently captured image during image capturing. Specifically, the control panel specification unit 157 acquires past information about a plurality of control panels 2, and compares the currently captured image during image capturing with the past information by the camera 110, wherein the past information indicates the model information and the installation position of each control device 210 previously specified by the device specification unit 152. When there is past information that matches the model information and the installation position information of the control device 210 specified from the currently captured image, the control panel specification unit 157 outputs a fact that the control panel 2 indicated by the past information is the control panel 2 during image capturing. The control panel specification unit 157 may output a name, an identifier, or the like for the specified control panel 2, or may express the position of the specified control panel 2 on the map as shown in FIG. 8. When the position of the control panel 2 is expressed on the map, the user may compare the actual scenery of the surrounding area with the map, to thereby evaluate whether the result specified by the control panel specification unit 157 is appropriate, and may perform the determination again in the wrong case.

The imaging display control unit 158 determines whether the control device 210 selected by the user is included in the captured image acquired after the selection. Specifically, the imaging display control unit 158 acquires the past information indicating the model information and the installation position of each control device 210 preciously specified by the device specification unit 152 from the storage unit 140 or the like, and compares the currently captured image during image capturing with the past information by the camera 110. When there is past information that matches the model information and the installation position information of the control device 210 specified from the currently captured image, the imaging display control unit 158 expresses the selected control device 210 on the captured image. Furthermore, a fact that there is matching past information is output to the outside. The output content may be light, sound, or the like. In addition, if there is no past information that matches the model information and the installation position information of the control device 210 specified from the currently captured image, the imaging display control unit 158 may perform guidance to the selected control device 210. Specifically, the imaging display control unit 158 may compare the installation position of the control device 210 specified from the currently captured image with the installation position of the selected control device 210, decide a direction toward the selected control device 210, and output the information for guiding in the decided direction in the captured image.

### (Search for selected imaging device)

An example of an operation, which is executed by the information processing apparatus 1 using the imaging display control unit 158 in the variation example to search the control device 210 by using the captured image after the user selects the specific control device 210, is described with reference to the respective diagrams in FIG. 7. FIG. 7 is a schematic diagram showing an example of an operation that is performed by the information processing apparatus 1 to recognize the control device 210 selected using the currently captured image. (a) of FIG. 7 shows an example in which the user selects a specific control device 210 on the list, and (b) of FIG. 7 shows an operation of the information processing apparatus 1 when the selected control device 210 is included in the captured image acquired after (a) of FIG. 7. (c) of FIG. 7 shows an operation of the information processing apparatus 1 when the selected control device 210 is not included in the captured image acquired after (a) of FIG. 7.
(a) of FIG. 7 is a schematic diagram showing an example in which the user selects one control device 210 from the list of the control devices 210 output to the output unit 130. In the illustrated example, the character string shown by a dotted line frame indicates the name of the selected control device 210. When the user selects the control device 210 from the list, the character string indicating the name of the selected control device 210 is expressed by boldface. At this time, the character string may be expressed by boldface, and be output in a color different from the name of the control device 210 that has not been selected. Moreover, the selection of the control device 210 may be performed on the layout diagram.
(b) of FIG. 7 is a schematic diagram showing an example in which the information processing apparatus 1 outputs the fact by light or sound when the selected control device 210 is included in the captured image acquired after (a) of FIG. 7. In the illustrated example, when the information processing apparatus 1 acquires a captured image, the image recognition unit 151 recognizes the ID code 211 included in the captured image, and the device specification unit 152 specifies the control device 210 associated with the ID code 211. When the specified control device 210 is the selected control device 210, the imaging display control unit 158 can use the output unit 130 to output the fact to the outside by light or sound.
(c) of FIG. 7 is a schematic diagram showing an example in which the information processing apparatus 1 performs guidance to the selected control device 210 when the selected control device 210 is not included in the captured image acquired after (a) of FIG. 7. In the illustrated example, the imaging display control unit 158 specifies a relative position between the control device 210 included in the captured image and the selected control device 210, and causes the direction from the captured image toward the selected control device 210 to be superimposed on the captured image with an arrow. The user of the information processing apparatus 1 can confirm the direction from the captured image toward the control device 210 selected by the user by, for example, acquiring an appropriate captured image after selecting the control device 210 from the list. Moreover, the guidance to the control device 210 is not limited to the method of superimposing the arrow on the captured image. For example, the direction from the current position toward the control device 210 may be indicated by a message such as "right direction" or may be guided by voice.

### (Flow of detailed information generation processing and imaging display control processing)

A flow of detailed information generation processing and imaging display control processing executed by the information processing apparatus 1 according to the variation example is described with reference to (a) of FIG. 9. (a) of FIG. 9 is a flowchart showing an example of the flow of the detailed information generation processing and the imaging display control processing executed by the information processing apparatus 1 according to the variation example.

First, when the user selects a specific control device 210 from the list or the like output to the output unit 130 (YES in S21), the layout diagram generation unit 154 generates a layout diagram that expresses the selected control device 210 (S22). Furthermore, the list generation unit 155 generates a list that expresses the selected control device 210 (S23).

After S23, the control unit 150 determines whether the acquisition of detailed information has been selected for the control device 210 selected by the user in S21 (S24). When it is determined that the acquisition of detailed information has been selected (YES in S24), the detailed information generation unit 156 generates detailed information about the selected control device 210 and uses the output unit 130 to outputs the detailed information (S25). After that, the processing proceeds to S26. On the other hand, when it is determined that the acquisition of detailed information has not been selected (NO in S24), the processing directly proceeds to S26.

In S26, the control unit 150 determines whether a captured image including the ID code 211 has been acquired (S26). When it is determined that the captured image has been acquired (YES in S26), similar to S2 and S3 in FIG. 5, the image recognition unit 151 recognizes the ID code 211 included in the captured image (S27), and the device specification unit 152 specifies the model information and the installation position of the control device 210 (S28). After that, the processing proceeds to S29. On the other hand, when it is determined that the captured image has not been acquired (NO in S26), the series of processing is ended.

In S29, the imaging display control unit 158 determines whether the control device 210 selected in S21 is included in the control devices 210 specified in S28 (S29). When it is determined that the selected control device 210 is included (YES in S29), the imaging display control unit 158 outputs the fact that the selected control device 210 is included in the captured image to the outside by light or sound, and expresses the control device 210 in the captured image (S30). Thereafter, the series of processing is ended. On the other hand, when it is determined that the control device 210 is not included (NO in S29), the imaging display control unit 158 performs guidance to the selected control device 210 with an arrow or the like from the relative relationship between the installation position of the control device 210 specified in S28 and the installation position of the control device 210 selected in S21 (S31). Thereafter, the series of processing is ended.

By the above processing, the information processing apparatus 1 can generate and output the detailed information for the control device 210 selected by the user, and use the captured image captured after selection to search for the control device 210.

### (Flow of control panel specification processing)

A flow of control panel specification processing executed by the information processing apparatus 1 according to the variation example is described with reference to (b) of FIG. 9. (b) of FIG. 9 is a flowchart showing an example of the flow of the control panel specification processing executed by the information processing apparatus 1.

First, similar to S1 to S3 in FIG. 5, the control device 210 included in the captured image is specified. That is, the control unit 150 uses the camera 110 to acquire a captured image including the ID code 211 (S41), and the image recognition unit 151 recognizes the ID code 211 included in the captured image (S42). Then, the device specification unit 152 specifies the model information and the installation position of the control device 210 associated with the ID code 211 recognized in S42 (S43).

After S43, the control panel specification unit 157 acquires, from the storage unit 140 or the like, the past information of the control device 210 regarding a plurality of control panels 2, and determines whether there is past information that matches the model information and the installation position specified in S43 (S44). When it is determined that there is matching past information (YES in S44), the control panel specification unit 157 specifies that the control panel 2 corresponding to the past information is the control panel 2 from which the captured image acquired in S41 is acquired (S45). Thereafter, the series of processing is ended. On the other hand, when it is determined that there is no matching past information (NO in S44), the control panel specification unit 157 outputs an error indicating that the control panel 2 from which the captured image is acquired cannot be specified in S41 (S46). Thereafter, the series of processing is ended.

By the above processing, the information processing apparatus 1 according to the variation example can use the captured image and the past information to specify the imaged control panel 2. That is, the control device 210 can be specified from the ID code 211 included in the captured image, and the control panel 2 in which the specified control device 210 is installed can be specified. Thereby, for example, when a plurality of control panels 2 of the same model is arranged in line, the work can be performed without making a mistake in the control panels 2.

### [Implementation example using software]

Control blocks (particularly, the image recognition unit 151, the device specification unit 152, the comparison unit 153, the layout diagram generation unit 154, the list generation unit 155, the detailed information generation unit 156, the control panel specification unit 157, and the imaging display control unit 158) of the information processing apparatus 1 may be implemented by a logic circuit (hardware) formed in an integrated circuit (IC chip) or the like, or may be implemented by software.

In the latter case, the information processing apparatus 1 includes a computer that executes commands of a program which is software for implementing each function. The computer includes, for example, one or more processors and a computer-readable recording medium in which the above program is stored. Besides, the processor reads the program from the recording medium and executes the program in the computer, thereby achieving the object of the present invention. For example, a central processing unit (CPU) can be used as the processor. In addition to a "non-transitory tangible media" such as a read only memory (ROM), a tape, a disk, a card, a semiconductor memory, a programmable logic circuit and the like can be used as the above recording medium. In addition, a random access memory (RAM) or the like for expanding the program may be further included. In addition, the program may be supplied to the computer via an optional transmission medium (a communication network, a broadcast wave or the like) capable of transmitting the program. Moreover, one aspect of the present invention can also be implemented in a form of a data signal which is embedded in a carrier wave and in which the program is embodied by electronic transmission.

The present invention is not limited to the above-described embodiments, and various changes can be made in the scope shown by the claims. Embodiments obtained by appropriately combining technical parts respectively disclosed in different embodiments are also included in the technical scope of the present invention.

### [Summary]

An information processing apparatus (1) according to aspect 1 of the present invention includes: an imaging device (camera 110) that acquires a captured image by capturing an image of a control panel (2) equipped with a plurality of control devices in which device identification images (ID codes 211) indicating model information are arranged; an image recognition unit (151) that recognizes the device identification images included in the captured image; a device specification unit that specifies the model information and installation positions of the control devices based on the device identification images recognized by the image recognition unit; and a layout diagram generation unit that generates a layout diagram of the control devices in the control panel based on the model information and the installation positions of the control devices specified by the device specification unit.

According to the configuration, the information processing apparatus can generate the layout diagram of the control devices equipped with the device identification images in the control panel by recognizing the device identification images. Thereby, for example, the user of the information processing apparatus can perform the work by using the layout diagram generated based on the actual configuration of the control panel. Thus, there is an effect that it is possible to provide an information processing apparatus that is excellent in convenience and that generates the layout diagram according to the actual configuration of the control panel on site.

In the information processing apparatus according to the above aspect, the device specification unit uniquely may specify a control device from the device identification images included in the captured image by using device identification information that associates the control devices with the device identification images.

An information processing apparatus (1) according to aspect 2 of the present invention is the information processing apparatus (1) according to aspect 1, wherein a list generation unit (155) may be further included, which generates a list of the control devices installed in the control panel (2) based on the model information and the installation positions of the control devices (210) specified by the device specification unit (152).

According to the configuration, the information processing apparatus can generate the list of the control devices in addition to the layout diagram of the control devices installed in the control panel. Thereby, for example, the user of the information processing apparatus can combine the layout diagram and the list to reliably recognize the control device which is a work target.

An information processing apparatus (1) according to aspect 3 of the present invention is the information processing apparatus (1) according to aspect 1 or 2, wherein the captured image may be a partial captured image of the control panel (2), and the device specification unit (152) may specify the installation positions of the control devices by combining a plurality of the captured images to recognize an overall configuration of the control panel.

According to the configuration, the information processing apparatus can combine the partial captured images of the control panel to recognize the overall configuration of the control panel, and generate the layout diagram of the control devices in the control panel.

An information processing apparatus (1) according to aspect 4 of the present invention is the information processing apparatus (1) according to any one of aspects 1 to 3, wherein the image recognition unit (151) may perform image recognition of an outer shape of the control devices (210), and the layout diagram generation unit (154) may use the outer shape of the control devices to generate the layout diagram. According to the configuration, the information processing apparatus can generate the layout diagram by using the outer shape of the control devices that are image-recognized from the captured image.

In the information processing apparatus according to the above aspect, the layout diagram and the list may be selectively output.

An information processing apparatus (1) according to aspect 5 of the present invention is the information processing apparatus (1) according to any one of aspects 1 to 4, wherein a comparison unit (153) may be further included, which acquires reference information indicating the model information and the installation positions of the control devices (210) in a predetermined state, compares the reference information with the model information and the installation positions of the control devices specified by the device specification unit (152), and extracts a difference; and the layout diagram generation unit (154) expresses the difference extracted by the comparison unit in the layout diagram.

According to the configuration, the information processing apparatus can generate the layout diagram that expresses the difference. Thereby, for example, it is possible to confirm whether the difference is the same as the content predicted in advance.

An information processing apparatus according to aspect 6 of the present invention is the information processing apparatus (1) according to aspect 5, wherein the reference information may be design information that is designed in advance by a user and indicates the installation states of the control devices (210) in the control panel (2), or past information indicating the model information and the installation positions of the control devices previously specified by the device specification unit (152).

According to the configuration, the information processing apparatus can extract the presence or absence of a difference between the design information or past information and the reference information, and express the difference in the layout diagram. Thereby, for example, it is possible to infer when the difference occurred.

An information processing apparatus (1) according to aspect 7 of the present invention is the information processing apparatus (1) according to aspect 5 or 6, wherein the reference information may include GPS information indicating the installation positions of the control devices (210), and the layout diagram generation unit (154) may express, using at least the GPS information, an altitude of the installation position of the control device corresponding to a model selected by the user in the layout diagram.

According to the above configuration, the information processing apparatus can express the difference in the layout diagram, and express the altitude of the installation position of the control device selected by the user by combining the GPS information and the map information or the like. Thereby, for example, it is possible to confirm at which position the control device corresponding to the difference was previously located.

In the information processing apparatus according to the above aspect, wherein the layout diagram and the list including the express of the difference, and the layout diagram and the list not including the express of the difference may be selectively output.

In the information processing apparatus according to the above aspect, the image recognition unit may perform image recognition of an external feature of the control devices, and the device specification unit may uniquely specify a control device from the model information associated with the external feature.

In the information processing apparatus according to the above aspect, the model information may include information such as the outer shape of the control devices, and the layout diagram generation unit may express, in the layout diagram, the control devices by a size or a shape according to the information such as the outer shape of the control devices included in the model information.

An information processing apparatus (1) according to aspect 8 of the present invention is the information processing apparatus (1) according to any one of aspects 1 to 7, wherein the layout diagram generation unit (154) may express, in the layout diagram, the control device (210) corresponding to the model selected by the user.

According to the configuration, the information processing apparatus can express the control device selected in the layout diagram. Thereby, for example, for the control device which is a work target, the work can be started after the installation position in the layout diagram and the control device existing at the installation position are confirmed.

An information processing apparatus (1) according to aspect 9 of the present invention is the information processing apparatus (1) according to aspect 8, wherein a detailed information generation unit (156) may be further included, which generates detailed information about the model selected by the user by referring to a model database that records detailed information about models.

According to the configuration, the information processing apparatus can generate the detailed information of the control device selected in the layout diagram. Thereby, for example, for the control device which is a work target, the work can be started after the installation position in the layout diagram and the detailed information of the control device are confirmed.

In the information processing apparatus according to the above aspect, the detailed information may be superimposed and expressed on the captured image.

An information processing apparatus (1) according to aspect 10 of the present invention is the information processing apparatus (1) according to any one of aspects 1 to 9, wherein a control panel specification unit (157) may be further included, which acquires past information about a plurality of control panels (2), compares a currently captured image during image capturing with the past information by the imaging device (camera 110), and thereby specifies the control panel during image capturing, wherein the past information indicates the model information and the installation positions of the control devices (210) previously specified by the device specification unit (152).

According to the configuration, the information processing apparatus can use the captured image and the past information to specify the imaged control panel. That is, the control device can be specified from the device identification image included in the captured image, and the control panel in which the specified control device is installed can be specified. Thereby, for example, when a plurality of control panels of the same model is arranged in line, it is possible to perform the work without making a mistake in the control panels and to confirm whether the control panels or control devices have been relocated.

In the information processing apparatus according to the above aspect, the position of the control panel during image capturing specified by the control panel specification unit may be expressed on a map.

An information processing apparatus (1) according to aspect 11 of the present invention is the information processing apparatus (1) according to any one of aspects 1 to 10, wherein an imaging display control unit (158) may be further included, which acquires the past information indicating the model information and the installation positions of the control devices (210) previously specified by the device specification unit (152), compares the currently captured image during image capturing with the past information by the imaging device (camera 110), and thereby expresses the control device selected by the user on the currently captured image.

According to the configuration, when the control device selected by the user is included in the captured image, the information processing apparatus can express that fact in the captured image. Thereby, for example, when a plurality of control devices of the same model is arranged in line, the control device selected by the user can be specified.

An information processing method according to aspect 12 of the present invention includes: an image recognition step (S2) of acquiring a captured image of a control panel (2) equipped with a plurality of control devices (210) in which device identification images (ID codes 211) indicating model information are arranged, and recognizing the device identification images included in the captured image; a device specification step (S3) of specifying the model information and installation positions of the control devices based on the device identification images which are recognized by the image recognition step; and a layout diagram generation step (S7) of generating a layout diagram of the control devices in the control panel based on the model information and the installation positions of the control devices which are specified by the device specification step. According to the above configuration, the same operational effect as that of aspect 1 is achieved.

One aspect of the present invention is an information processing program for causing a computer to function as the information processing apparatus according to any one of the above aspects and causing the computer to function as each of the units.

### [Reference Signs List]

- 1: information processing apparatus
- 110: camera (imaging device)
- 120: input unit
- 130: output unit
- 140: storage unit
- 150: control unit
- 151: image recognition unit
- 152: device specification unit
- 153: comparison unit
- 154: layout diagram generation unit
- 155: list generation unit
- 156: detailed information generation unit
- 157: control panel specification unit
- 158: imaging display control unit

## Claims

1. An information processing apparatus, comprising: an imaging device that captures an image of a control panel to acquire a captured image, wherein the control panel is equipped with a plurality of control devices in which device identification images indicating model information are arranged;
an image recognition unit that recognizes the device identification images comprised in the captured image;
a device specification unit that specifies the model information and installation positions of the control devices based on the device identification images recognized by the image recognition unit; and
a layout diagram generation unit that generates a layout diagram of the control devices in the control panel based on the model information and the installation positions of the control devices specified by the device specification unit.

2. The information processing apparatus according to 1, wherein the device specification unit uniquely specifies a control device from the device identification images comprised in the captured image by using device identification information that associates the control devices with the device identification images.

3. The information processing apparatus according to claim 1 or 2, further comprising a list generation unit that generates a list of the control devices installed in the control panel based on the model information and the installation positions of the control devices specified by the device specification unit.

4. The information processing apparatus according to claim 3, wherein the layout diagram and the list are selectively output.

5. The information processing apparatus according to claim 3 or 4, further comprising a comparison unit that acquires reference information indicating the model information and the installation positions of the control devices in a predetermined state, compares the reference information with the model information and the installation positions of the control devices specified by the device specification unit, and extracts a difference,
wherein the layout diagram generation unit expresses the difference extracted by the comparison unit in the layout diagram.

6. The information processing apparatus according to claim 5, wherein the reference information is
design information that is designed in advance by a user and indicates the installation states of the control devices in the control panel, or
past information indicating the model information and the installation positions of the control devices previously specified by the device specification unit.

7. The information processing apparatus according to 5 or 6, wherein the reference information comprises GPS information indicating the installation positions of the control devices, and
the layout diagram generation unit expresses, using at least the GPS information, an altitude of the installation position of the control device corresponding to a model selected by the user in the layout diagram.

8. The information processing apparatus according to any one of claims 5 to 7, wherein the layout diagram and the list comprising the expression of the difference, and the layout diagram and the list not comprising the expression of the difference are selectively output.

9. The information processing apparatus according to any one of claims 1 to 8, wherein the captured image is a partial captured image of the control panel, and
the device specification unit specifies the installation positions of the control devices by combining a plurality of the captured images to recognize an overall configuration of the control panel.

10. The information processing apparatus according to any one of claims 1 to 9, wherein the image recognition unit performs image recognition of an outer shape of the control devices, and
the layout diagram generation unit uses the outer shape of the control devices to generate the layout diagram.

11. The information processing apparatus according to any one of claims 1 to 10, wherein the image recognition unit performs image recognition of an external feature of the control devices, and
the device specification unit uniquely specifies a control device from the model information associated with the external feature.

12. The information processing apparatus according to any one of claims 1 to 11, wherein the model information comprises information such as the outer shape of the control devices, and
the layout diagram generation unit expresses, in the layout diagram, the control devices by a size or a shape according to the information such as the outer shape of the control devices comprised in the model information.

13. The information processing apparatus according to any one of claims 1 to 12, wherein the layout diagram generation unit expresses, in the layout diagram, the control device corresponding to the model selected by the user.

14. The information processing apparatus according to claim 13, further comprising a detailed information generation unit that generates detailed information about the model selected by the user by referring to a model database that records detailed information about models.

15. The information processing apparatus according to claim 14, wherein the detailed information is superimposed and expressed on the captured image.

16. The information processing apparatus according to any one of claims 1 to 15, further comprising a control panel specification unit that acquires past information about a plurality of control panels, compares a currently captured image during image capturing with the past information by the imaging device, and thereby specifies the control panel during image capturing, wherein the past information indicates the model information and the installation positions of the control devices previously specified by the device specification unit.

17. The information processing apparatus according to claim 16, wherein the position of the control panel during image capturing that is specified by the control panel specification unit is expressed on a map.

18. The information processing apparatus according to any one of claims 1 to 17, further comprising an imaging display control unit that acquires the past information indicating the model information and the installation positions of the control devices previously specified by the device specification unit, compares the currently captured image during image capturing with the past information by the imaging device, and thereby expresses the control device selected by the user on the currently captured image.

19. An information processing method, comprising: an image recognition step of acquiring a captured image of a control panel equipped with a plurality of control devices in which device identification images indicating model information are arranged, and recognizing the device identification images comprised in the captured image;
a device specification step of specifying the model information and installation positions of the control devices based on the device identification images which are recognized by the image recognition step; and
a layout diagram generation step of generating a layout diagram of the control devices in the control panel based on the model information and the installation positions of the control devices which are specified by the device specification step.

20. An information processing program for causing a computer to function as the information processing apparatus according to any one of claims 1 to 18 and causing the computer to function as each of the units.
